# EUROPÄISCHE PATENTSCHRIFT

(11) **EP 1 934 666 B1**
(45) Veröffentlichungstag und Bekanntmachung des Hinweises auf die Patenterteilung: **19.08.2009**
(21) Anmeldenummer: 06806810.5
(22) Anmeldetag: 25.09.2006
(51) Int. Cl.: G05D 23/19

(54) **VERFAHREN ZUR STEUERUNG UND/ODER REGELUNG EINER RAUMTEMPERATUR IN EINEM GEBÄUDE**
METHOD FOR CONTROLLING AND/OR REGULATING ROOM TEMPERATURE IN A BUILDING
PROCEDE DE COMMANDE ET/OU DE REGULATION D'UNE TEMPERATURE AMBIANTE DANS UN BATIMENT

(30) Priorität: 14.10.2005 US 726109 P
(43) Veröffentlichungstag der Anmeldung: 25.06.2008
(73) Patentinhaber: SIEMENS AKTIENGESELLSCHAFT, 80333 München (DE)
(72) Erfinder: GWERDER, Markus, 6312 Steinhausen (CH); TOEDTLI, Jürg, 8049 Zürich (CH)
(86) Internationale Anmeldenummer: PCT/EP2006/066717
(87) Internationale Veröffentlichungsnummer: WO 2007/042390

(56) Entgegenhaltungen:
- EP-A- 1 300 634
- EP-A1- 0 590 250
- DE-A1- 2 606 296
- DE-C1- 10 060 797
- US-A- 5 439 049
- US-A1- 2003 056 946

## Beschreibung

Die Erfindung bezieht sich auf ein Verfahren zur Steuerung und/oder Regelung einer Raumtemperatur gemäss dem Oberbegriff des Anspruchs 1.

Das Verfahren ist allgemein zur Steuerung und/oder Regelung der Temperatur in Räumen oder Zonen in einem Gebäude einsetzbar. Verfahren dieser Art werden mit Vorteil insbesondere auch in Gebäuden verwendet, die über die Gebäudemasse, beispielsweise über massive Betonelemente in Böden, Decken und/oder Wänden, gekühlt und beheizt werden. Verfahren dieser Art sind also mit Vorteil auch zur Anwendung in einem thermoaktive Bauteilsysteme aufweisenden Gebäude einsetzbar.

Thermoaktive Bauteilsysteme für Kühl- und Heizzwecke, sogenannte TABS, kommen in verschiedenen Gebäudearten, wie beispielsweise in Bürobauten, Museen, Bädern, Laborgebäuden, Schulungszentren, Hotels und Ein- oder Mehrfamilienhäusern zum Einsatz. Bei der TABS Technologie erfolgt eine Stabilisierung der Raumtemperatur vorteilhafterweise mittels in Böden und Decken eingelegten Rohrregistern, die beispielsweise mit Heiz- oder Kühlwasser gespeist sind. Böden und Decken aus Beton beispielsweise, sind bestens für die Speicherung von Wärme oder Kälte geeignet. Zur Kühlung von TABS ist beispielsweise auch freie Kühlung mit Luft gebräuchlich, wobei beispielsweise über trockene oder hybride Rückkühler im Sommer die Nachtstunden zur Auskühlung von Betonmassen genutzt werden. TABS mit raumtemperaturnahen Mediumstemperaturen sind grundsätzlich für den Einsatz von alternativen Energien prädestiniert. Die TABS Technologie ist auch unter den Fachausdrücken Bauteilkonditionierung, Betonkernaktivierung und "concrete core conditioning system" bekannt.

Verfahren zur Steuerung oder Regelung einer Raumtemperatur in einem Gebäude sind aus US 5,439,049 und aus US 2003/056946 A1 bekannt. In US 5, 439, 049 wird vorgeschlagen, aus einer Folge von gemessenen Aussentemperaturwerten einen künftigen Schätzwert für die Aussentemperatur zu berechnen und Heiz- und Kühlsysteme auf Grund des vorausberechneten Schätzwerts ein- oder auszuschalten. Gemäss einem in US 2003/056946 A1 beschriebenen Verfahren wird ein Wechsel zwischen Heiz- und Kühlbetrieb auf Grund eines Vergleichs eines für die Raumtemperatur vorausberechneten Schätzwerts und der später dann tatsächlich gemessenen Raumtemperatur veranlasst.

Der Erfindung liegt die Aufgabe zugrunde, ein allgemein einsetzbares Verfahren zur Steuerung und Regelung der Temperatur in Gebäuderäumen oder Raumzonen anzugeben, durch welches ein gewünschter Komfort bei geringem Energieeinsatz erreichbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
Fig. 1 ein Diagramm zur Steuer- und/oder Regelstrategie bei kleiner Unsicherheit in der Kenntnis der internen und externen Wärmegewinne,
Fig. 2 ein Diagramm zur Steuer- und/oder Regelstrategie bei mittlerer Unsicherheit in der Kenntnis der internen und externen Wärmegewinne,
Fig. 3 ein Diagramm zur Steuer- und/oder Regelstrategie bei grosser Unsicherheit in der Kenntnis der internen und externen Wärmegewinne, und
Fig. 4 eine schematische Darstellung einer Anordnung zur Steuerung und/oder Regelung einer Raumtemperatur in einem thermoaktive Bauteilsysteme aufweisenden Gebäude.

Ein hier vorgeschlagenes Verfahren zur Steuerung und/oder Regelung einer Raumtemperatur basiert auf einem sogenannten unknown-but-bounded Ansatz, mit welchem Unsicherheiten in der Kenntnis von internen und externen Wärmegewinnen behandelt werden können. Insbesondere durch Personen, Geräte, Maschinen, Beleuchtung und absorbierte Sonnenstrahlung generierte interne oder externe Wärmegewinne oder Wärmelasten beeinflussen den Verlauf der Temperatur in einem Raum. Der Ausdruck Wärmegewinn wird hier allgemein verwendet und steht auch für Fremdwärme oder Wärmelast.

Das Verfahren zur Steuerung und/oder Regelung einer Raumtemperatur benutzt eine ermittelte und damit bekannte untere Schranke *q̇_{g.lb}* der internen und externen Wärmegewinne und eine ermittelte und damit bekannte obere Schranke *q̇_{g.ub}* der internen und externen Wärmegewinne. Die Differenz zwischen der oberen Schranke *q̇_{g.ub}* und der unteren Schranken *q̇_{g.lb}* ist die Unsicherheit in der Kenntnis der Wärmegewinne.

Die untere Schranke *q̇_{g.lb}* der internen und externen Wärmegewinne und die obere Schranke *q̇_{g.ub}* der internen und externen Wärmegewinne werden in einer Konstruktionsphase vom Planer eines Regelschemas ermittelt. In der besagten Konstruktionsphase werden also nicht mittlere Wärmegewinne angenommen, sondern es wird von einer im voraus bekannten unteren Schranke *q̇_{g.lb}* und einer im voraus bekannten oberen Schranke *q̇_{g.ub}* der internen und externen Wärmegewinne ausgegangen.

Unter Berücksichtigung der Unsicherheit in der Kenntnis der internen und externen Wärmegewinne ist das Vorgehen beim unknown-but-bounded Ansatz sinngemäss einem bei konventionellen Heizkurven anwendbaren Vorgehen. Zum Heizen und Kühlen werden Heiz- und Kühlkurven eingesetzt. Ein Wärmeverlust durch die Gebäudehülle wird von einem Heizsystem durch Energiezufuhr *q̇_{w}* > 0 ausgeglichen, beispielsweise durch Zufuhr von entsprechend aufgeheiztem Wasser. Im Gegensatz dazu wird ein Überschreiten einer maximal zulässigen Raumtemperatur durch ein Abführen von Wärmeenergie *q̇_{w}* < 0 verhindert, beispielsweise durch Zufuhr von entsprechend gekühltem Wasser.

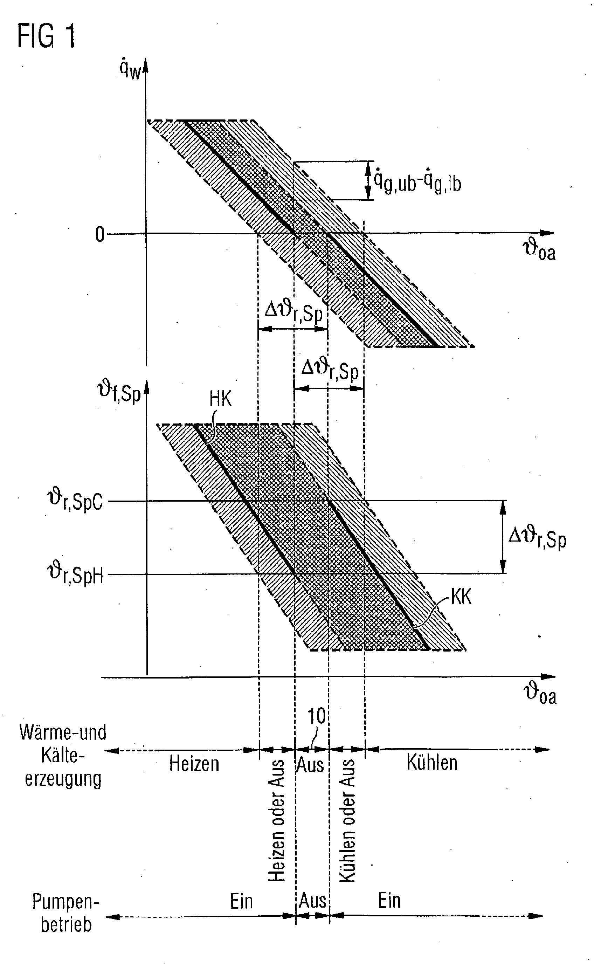

In Fig. 1, Fig. 2 und Fig. 3 ist das Prinzip des vorteilhaften Verfahrens zur Steuerung und/oder Regelung einer Raumtemperatur - beispielhaft für eine aussentemperaturgeführte Vorlauftemperaturregelung - veranschaulicht.

Pro Figur sind jeweils der Vorlauftemperatursollwert ϑ*_{f.Sp}* und die von einem Heiz- und Kühlsystem zu- beziehungsweise abgeführte Wärmeenergie *q̇_{w}* abhängig von der Außenlufttemperatur ϑ*ₒₐ* dargestellt. Ausserdem sind Zustände einer Umwälzpumpe und Zustände von Heizung beziehungsweise Kühlung in Abhängigkeit der Außenlufttemperatur ϑ*ₒₐ* dargestellt.

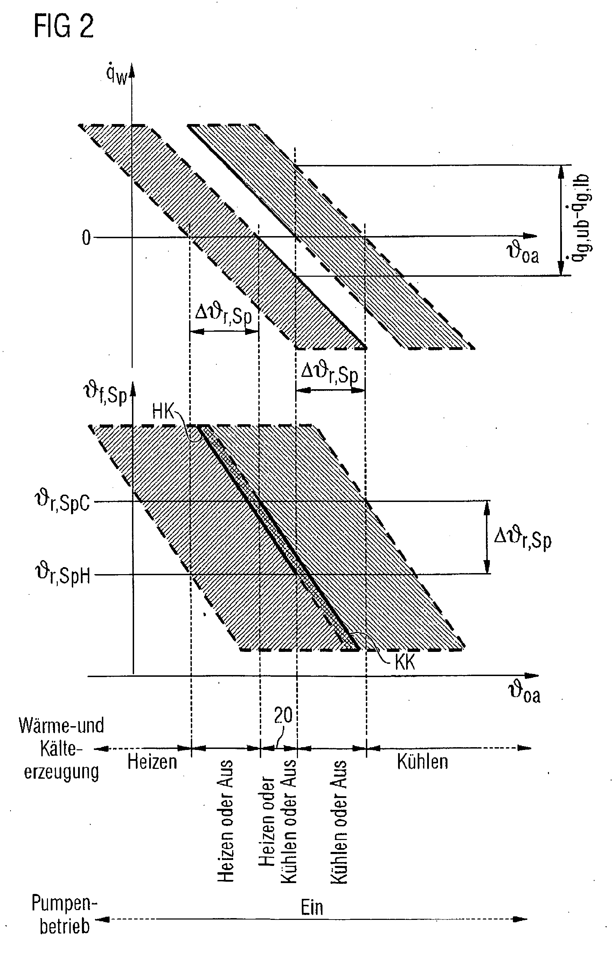

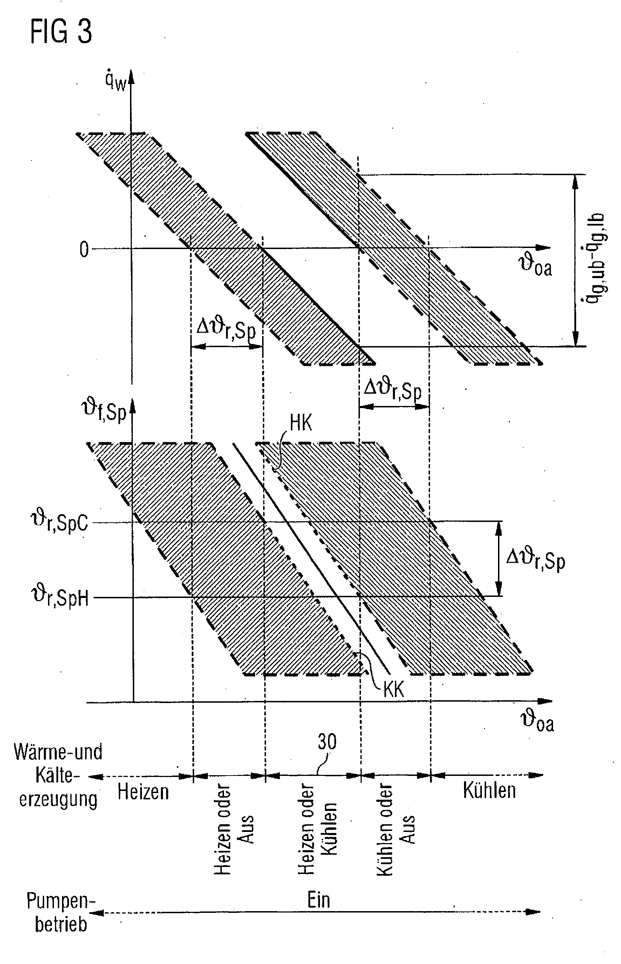

Bei der aussentemperaturgeführten Vorlauftemperaturregelung wird ein Vorlauftemperatursollwert ϑ*_{f.Sp}* abhängig von der Außenlufttemperatur ϑ*ₒₐ* gemäss einer Heizkurve HK oder einer Kühlkurve KK verschoben. Abhängig von der Unsicherheit in der Kenntnis des internen und externen Wärmegewinns werden vorteilhafterweise folgende drei Fälle unterschieden: geringe Unsicherheit *q̇_{g.ub}* - *q̇_{g.lb}* (Fig. 1), mittlere Unsicherheit *q̇_{g.ub}*-*q̇_{g.lb}* (Fig. 2) und große Unsicherheit *q̇_{g.ub}-q̇_{g.lb}* (Fig. 3).

In Fig. 1, Fig. 2 und Fig. 3 ist jeweils ein festgelegtes Behaglichkeitsband Δϑ*_{r.Sp}* eingezeichnet. Das Behaglichkeitsband Δ*ϑ_{r.Sp}* ist durch einen unteren Raumtemperatursollwert ϑ*_{r.SpH}* und einen oberen Raumtemperatursollwert ϑ*_{r.SpC}* definiert.

Vorteilhafterweise ist das Behaglichkeitsband Δϑ*_{r.Sp}* für jeden Raum eines Gebäudes je nach gewünschtem Komfort festgelegt. Je größer die Behaglichkeitsbänder sind, desto energiesparender kann das Gebäude klimatisiert werden und desto besser eignen sich TABS zur Gesamtabdeckung des Gebäudes. Bei zu kleinem Behaglichkeitsbänd Δϑ*_{r.Sp}* sind TABS aufgrund ihrer Trägheit nicht in der Lage, die Gesamtwärme- bzw. Kühllast eines Gebäudes zu decken.

Wenn die Unsicherheit gering ist, also in dem in Fig. 1 dargestellten Fall, dann gibt es einen Bereich 10 für die Außenlufttemperatur ϑ*ₒₐ*, in dem mit Bestimmtheit weder Heizung noch Kühlung erforderlich ist. Bei geringer Unsicherheit existiert für die Außenlufttemperatur ϑ*ₒₐ* also kein Bereich, in dem sich die Heizkurve HK und die Kühlkurve KK überlappen.

Wenn eine mittlere Unsicherheit vorliegt, also in dem in Fig. 2 dargestellten Fall, gibt es einen Bereich 20 für die Außenlufttemperatur ϑ*ₒₐ*, in dem sich die Heizkurve HK und die Kühlkurve KK überlappen, wobei die Kühlkurve KK oberhalb der Heizkurve HH verläuft. Liegt die Außenlufttemperatur ϑ*ₒₐ* im Bereich 20, dann ist in Abhängigkeit vom tatsächlichen internen und externen Wärmegewinn *q̇_{g}* entweder ein Heizen, oder ein Kühlen oder dann gar keine Aktion, also ein neutrales Verhalten durch Ausschalten von Heizung und Kühlung, erforderlich.

Ein Vorlauftemperaturregler bewirkt mit Kenntnis der Vorlauftemperatur ϑ*_{f}* und einer aktuellen Stellgliedposition die korrekte Aktion, nämlich entweder Heizen, oder Kühlen, oder dann Ausschalten von Heizung und Kühlung. Liegt die Vorlauftemperatur ϑ*_{f}* zwischen der Heizkurve HK und der Kühlkurve KK, dann sind Heizung und Kühlung ausgeschaltet, beispielsweise durch Schliessen von Heiz- und Kühlventilen. Sobald die Vorlauftemperatur ϑ*_{f}* die Kühlkurve. KK überschreitet, regelt der Vorlauftemperaturregler die Vorlauftemperatur ϑ*_{f}* auf den durch die Kühlkurve KK bestimmten Vorlauftemperatursollwert ϑ*_{f.Sp}*, beispielsweise durch Einwirken auf ein Kühlventil. Sobald die Vorlauftemperatur ϑ*_{f}* die Heizkurve HK unterschreitet, regelt der Vorlauftemperaturregler die Vorlauftemperatur ϑ*_{f}* auf den durch die Heizkurve HK bestimmten Vorlauftemperatursollwert ϑ*_{f.Sp}*, beispielsweise durch Einwirken auf ein Heizventil.

Wenn eine grosse Unsicherheit vorliegt, also in dem in Fig. 3 dargestellten Fall, gibt es für die Außenlufttemperatur ϑ*ₒₐ* einen Bereich 30, in dem sich die Heizkurve HK und die Kühlkurve KK überlappen, wobei die Kühlkurve KK unterhalb der Heizkurve KK liegt. Liegt die Außenlufttemperatur ϑ*ₒₐ* im Bereich 30, dann ist in Abhängigkeit vom tatsächlichen internen und externen Wärmegewinn *q̇_{g}* entweder ein Heizen, oder ein Kühlen erforderlich.

Wenn die durch die obere Schranke *q̇_{g.ub}* und die untere Schranke *q̇_{g.lb}*, gesetzte Unsicherheit groß ist, also in dem in der Fig. 3 dargestellten, dann ist es mit einer von der Außenlufttemperatur ϑ*ₒₐ* allein geführten Regelung der Vorlauftemperatur ϑ*_{f}* nicht möglich, die Raumtemperatur 9, für die im Unsicherheitsbereich q̇*_{g.ub}* - *q̇_{g.lb}* liegenden Wärmegewinne *q̇_{w}* zwischen dem unteren Raumtemperatursollwert ϑ*_{r.SpH}* und dem oberen Raumtemperatursollwert ϑ*_{r.SpC}*, also im angestrebten Behaglichkeitsband Δϑ*_{r.Sp}* zu halten.

Um in dem in der Fig. 3 dargestellten Fall die Raumtemperatur ϑ*ᵣ* im Behaglichkeitsband Δϑ*_{r.Sp}* zu halten, wird eine zusätzliche Information - beispielsweise die Raumtemperatur ϑ*ᵣ* oder die Rücklauftemperatur ϑ*ᵣₜ* oder eine Temperatur ϑ*_{C}* der Gebäudemasse, beispielhaft die Betonkerntemperatur, auf den Vorlauftemperaturregler zurückgeführt. Unter gewissen Umständen ist ein Zusatzsystem zum Heizen und/oder Kühlen notwendig.

Der sogenannte unknown-but-bounded Ansatz ist vorteilhafterweise auch entsprechend anwendbar, um Variationen von Wärmegewinnen in Gebäuderäumen insbesondere aufgrund von Raumstandort, Raumeigenschaften und Raumnutzung zu berücksichtigen, wenn die Raumtemperatur ϑ*ᵣ* der Gebäuderäume nicht individuell, sondern beispielsweise über einen gemeinsamen Vorlauf regelbar ist.

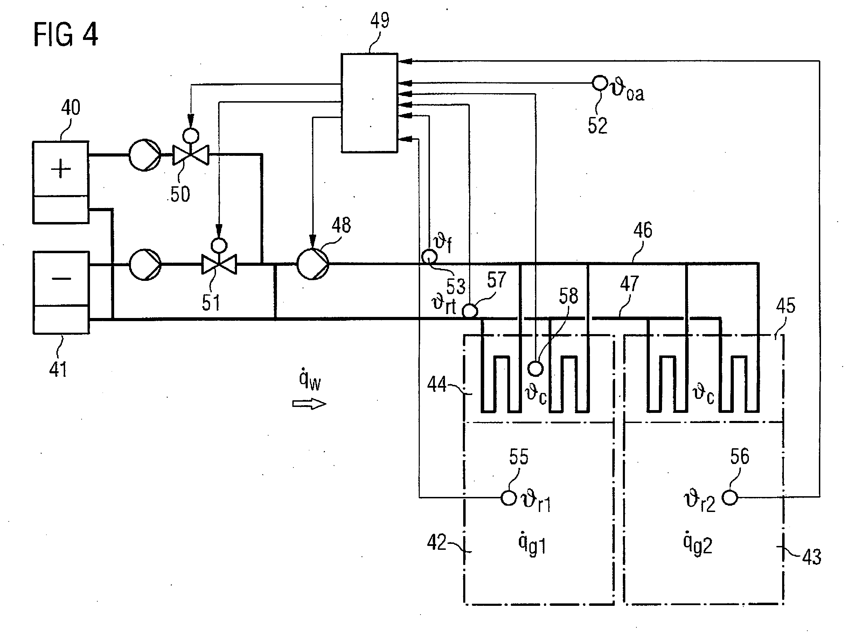

In der Fig. 4 bedeutet 40 eine Einrichtung zum Heizen eines Energieträgers und 41 eine Einrichtung zum Kühlen des Energieträgers. Ein Gebäude mit einem ersten Raum 42 und einem zweiten Raum 43 weist eine erste TABS-Einheit 44 und zweite TABS-Einheit 45 auf. Die beiden TABS-Einheiten 44 und 45 sind über einen gemeinsamen Vorlauf 46 und über einen Rücklauf 47 mit dem Energieträger speisbar. Vorteilhafterweise ist im Vorlauf 46 eine von einem Regler 49 steuerbare. Umwälzpumpe 48 angeordnet. Der Vorlauf 46 ist über ein vom Regler 49 steuerbares Heizventil 50 mit der Einrichtung 40 zum Heizen des Energieträgers und über ein vom Regler 49 steuerbares Kühlventil 51 mit der Einrichtung 41 zum Kühlen des Energieträgers verbunden.

Der Energieträger ist beispielhaft zum Heizen und Kühlen einsetzbares Wasser. Die Einrichtung 40 zum Heizen des Energieträgers ist je nach Anforderung beispielsweise ein Heizkessel, eine Wärmepumpe oder ein anderer bekannter Wärmeerzeuger beziehungsweise eine Kombination bekannter Wärmeerzeuger. Die Einrichtung 41 zum Kühlen ist beispielsweise ein Kühlturm, eine Kältemaschine oder ein anderer Kälteerzeuger beziehungsweise eine Kombination bekannter Kälteerzeuger.

Mit einem ersten mit dem Regler 49 verbundener Temperaturfühler 52 ist die Außenlufttemperatur ϑ*ₒₐ* und mit einem zweiten mit dem Regler 49 verbundenen Temperaturfühler 53 die Vorlauftemperatur ϑ*_{f}* erfassbar.

Wenn die Unsicherheit gering ist (Fig. 1) und die Außenlufttemperatur ϑ*ₒₐ* im Bereich 10 liegt, dann werden Heizen und Kühlen durch Schliessen des Heizventils 50 und des Kühlventils 51 ausgeschaltet, ausserdem wird vorteilhafterweise die Umwälzpumpe 48 ausgeschaltet. Heizen wird durch ein Öffnen des Heizventils 50 bei geschlossenem Kühlventil 51 realisiert, entsprechend wird Kühlen durch ein Öffnen des Kühlventils 51 bei geschlossenem Heizventil 50 bewirkt. Beim Heizen oder Kühlen wird die Umwälzpumpe aktiviert.

Wenn eine mittlere Unsicherheit vorliegt (Fig. 2), und die Außenlufttemperatur ϑ*ₒₐ* im Bereich 20 liegt, dann ist in Abhängigkeit vom tatsächlichen internen und externen Wärmegewinn *q̇_{g}* entweder ein Heizen, oder ein Kühlen oder dann gar keine Aktion, also ein neutrales Verhalten durch Ausschalten von Heizung und Kühlung, erforderlich.

Der Regler 49 bewirkt mit.Kenntnis der Vorlauftemperatur ϑ*_{f}* und einer aktuellen Stellgliedposition die korrekte Aktion, nämlich entweder Heizen, oder Kühlen, oder dann Ausschalten von Heizung und Kühlung. Liegt die Vorlauftemperatur ϑ*_{f}* zwischen der Heizkurve HK und der Kühlkurve KK, dann sind das Heizventil 50 und das Kühlventil 51 geschlossen. Sobald die Vorlauftemperatur ϑ*_{f}* die Kühlkurve KK überschreitet, regelt der Regler 49 die Vorlauftemperatur ϑ*_{f}* auf den durch die Kühlkurve KK bestimmten Vorlauftemperatursollwert ϑ*_{f.Sp}* durch Einwirken auf das Kühlventil 51. Sobald die Vorlauftemperatur ϑ*_{f}* die Heizkurve HK unterschreitet, regelt der Regler 49 die Vorlauftemperatur ϑ*_{f}* auf den durch die Heizkurve HK bestimmten Vorlauftemperatursollwert ϑ*_{f.Sp}* durch Einwirken auf das Heizventil 50.

Damit der Regler 49 die Raumtemperatur ϑᵣ auch bei grosser Unsicherheit *q̇_{g.ub}-q̇_{g.lb}* in der Kenntnis der internen und externen Wärmegewinne im Behaglichkeitsband Δϑ*_{r.Sp}* halten kann, wird dem Regler 49 wenigstens eine zusätzliche Information zugeführt. Die zusätzliche Information ist beispielsweise die von einem dritten Temperaturfühler 55 gemessene Raumtemperatur ϑ_{*r*1} des ersten Raumes 42, die von einem vierten Temperaturfühler 56 gemessene Raumtemperatur ϑ_{*r*2} des zweiten Raumes 43, die von einem fünften Temperaturfühler 57 gemessene Rücklauftemperatur ϑ*ᵣₜ* oder die von einem sechsten Temperaturfühler 58 in der TABS-Einheit 44 gemessene Temperatur ϑ*_{C}* der Gebäudemasse.

## Patentansprüche

1. Verfahren zur Steuerung oder Regelung einer Raumtemperatur (ϑ*ᵣ*) in einem Gebäude, **dadurch gekennzeichnet,**
**dass** ein Umschalten zwischen Heizen, neutralem Verhalten und Kühlen abhängig ist von einer in einer Konstruktionsphase bestimmten Unsicherheit in der Kenntnis der internen und externen Wärmegewinne, wobei die Unsicherheit in der Kenntnis der internen und externen Wärmegewinne durch eine untere Fremdwärmeschranke (*q̇_{g.lb}*) und eine obere Fremdwärmeschranke (*q̇_{g.ub}*) festgelegt ist.

2. Verfahren nach Anspruch 1, **dadurch gekennzeichnet,**
**dass** die Unsicherheit (*q̇_{g.ub}-q̇_{g.lb}*) in der Kenntnis der internen und externen Wärmegewinne aufgrund von Raumstandort, Raumeigenschaften und Raumnutzung festgelegt ist.

3. Verfahren nach Anspruch 1, **dadurch gekennzeichnet,**
**dass** die Unsicherheit (*q̇_{g.ub}-q̇_{g.lb}*) in der Kenntnis der internen und externen Wärmegewinne einer von insgesamt drei verschiedenen Unsicherheitsstufen zugeordnet ist.

4. Verfahren nach Anspruch 3, **dadurch gekennzeichnet,**
**dass** ein Umschalten zwischen Heizen, neutralem Verhalten und Kühlen abhängig ist:
- in einer ersten, bei geringer Unsicherheit (*q̇_{g.ub}-q̇_{g.lb}*) geltenden Unsicherheitsstufe von der Aussentemperatur (ϑ*ₒₐ*);
- in einer zweiten, bei mittlerer Unsicherheit (*q̇_{g.ub}-q̇_{g.lb}*) geltenden Unsicherheitsstufe von der Aussentemperatur (ϑ*ₒₐ*) und der Vorlauftemperatur (ϑ*_{f}*);
- in einer dritten, bei grosser Unsicherheit (*q̇_{g.ub}-q̇_{g.lb}*) geltenden Unsicherheitsstufe von der Raumtemperatur (ϑ*ᵣ*) oder von der Rücklauftemperatur (ϑ*ᵣₜ*) oder von der Temperatur (ϑ_{C}) der Gebäudemasse.

5. Verfahren nach einem vorangehenden Anspruch, **dadurch gekennzeichnet,**
**dass** das Umschalten zwischen Heizen, neutralem Verhalten und Kühlen weiter abhängig ist von in einer Konstruktionsphase bestimmten Variationen (*q̇_{g.ub}-q̇_{g.lb}*) von Wärmegewinnen in Gebäuderäumen, wobei die Variationen (*q̇_{g.ub}-q̇_{g.lb}*) der Wärmegewinne durch die untere Fremdwärmeschranke (*q̇_{g.lb}*) und die obere Fremdwärmeschranke (*q̇_{g.ub}*) festgelegt sind.

6. Verfahren nach Anspruch 5, **dadurch gekennzeichnet,**
**dass** die Variationen (*q̇_{g.ub}-q̇*_{*g.lb*)} der Wärmegewinne in Gebäuderäumen aufgrund von Raumstandort, Raumeigenschaften und Raumnutzung festgelegt sind.

7. Verfahren nach Anspruch 5, **dadurch gekennzeichnet,**
**dass** die Variationen (*q̇_{g.ub}-q̇_{g.lb}*) der Wärmegewinne einer von insgesamt drei verschiedenen Stufen zugeordnet ist.

8. Verfahren nach Anspruch 5, **dadurch gekennzeichnet,**
**dass** ein Umschalten zwischen Heizen, neutralem Verhalten und Kühlen abhängig ist:
- in einer ersten, bei geringer Variation (*q̇_{g.ub}-q̇_{gu.lb}*) geltenden Stufe von der Aussentemperatur (ϑ*ₒₐ*);
- in einer zweiten, bei mittlerer Variation (*q̇_{g.ub}*-*q̇_{g.lb}*) geltenden Stufe von der Aussentemperatur (ϑ*ₒₐ*) und der Vorlauftemperatur (ϑ*_{f}*);
- in einer dritten, bei grosser Variation (*q̇_{g.ub}*) geltenden Stufe von der Raumtemperatur (ϑ*ᵣ*) oder von der Rücklauftemperatur (ϑ*ᵣₜ*) oder von der Temperatur (ϑ*_{C}*) der Gebäudemasse.

9. Verfahren nach Anspruch 1 **gekennzeichnet durch**
Berechnen wenigstens einer Stellgrösse eines Stellglieds (50; 51) in Abhängigkeit der unteren Fremdwärmeschranke (*q̇_{g.lb}*) und der oberen Fremdwärmeschranke (*q̇_{g.ub}*).

10. Verfahren nach Anspruch 9, **dadurch gekennzeichnet,**
**dass** das Berechnen der Stellgrösse weiter abhängig von einem Behaglichkeitsband (Δϑ*_{r.Sp}*) berechnet wird.

11. Verfahren nach Anspruch 9 oder 10, **dadurch gekennzeichnet,**
**dass** das Berechnen der Stellgrösse weiter abhängig von einer Messgrösse und wenigstens einer weiteren Grösse berechnet wird.

12. Verfahren nach Anspruch 11, **dadurch gekennzeichnet,**
**dass** die Messgrösse die Vorlauftemperatur (ϑ*_{f}*) oder die Rücklauftemperatur (ϑ*ᵣₜ*) oder eine Bauteiltemperatur (ϑ*_{C}*) ist.

13. Verfahren nach Anspruch 11, **dadurch gekennzeichnet,**
**dass** die weitere Grösse die Aussentemperatur (ϑ*ₒₐ*) oder die Raumtemperatur (ϑ*ᵣ*) ist.

14. Verfahren nach einem vorangehenden Anspruch, **dadurch gekennzeichnet, dass** das Gebäude Thermoaktive Bauteilsysteme TABS (44; 45) aufweist.

15. Verfahren nach einem vorangehenden Anspruch, dass einem Überschreiten eines oberen Grenzwerts (ϑ*_{r.SpC}*) eines Behaglichkeitsbandes und einem Unterschreiten eines unteren Grenzwerts (ϑ*_{r.SpH}*) des Behaglichkeitsbandes durch ein Rückführungssignal entgegengewirkt wird.

16. Verfahren nach Anspruch 15, **dadurch gekennzeichnet,**
**dass** das Rückführungssignal von dem jeweils am Ende einer Belegungsperiode erfassten Wert der Raumtemperatur (ϑ*ᵣ*) abhängig generiert wird.

17. Verfahren nach Anspruch 16, **dadurch gekennzeichnet,**
**dass** das Rückführungssignal von dem in einer Belegungsperiode erfassten minimalen Wert der Raumtemperatur (ϑ*ᵣ*) und dem in der Belegungsperiode erfassten maximalen Wert der Raumtemperatur (ϑ*ᵣ*) abhängig generiert wird.

18. Verfahren nach einem Vorangehenden Anspruch, **dadurch gekennzeichnet,**
**dass** die obere Fremdwärmeschranke (*q̇_{g.ub}*) und die untere Fremdwärmeschranke (*q̇_{g.lb}*) zeitabhängig berücksichtig wird.

19. Einrichtung (49) zur rückgeführten Regelung der Raumtemperatur (ϑ*ᵣ*) nach dem Verfahren gemäss einem der Ansprüche 1 bis 18.

## Claims

1. Method for controlling or regulating a room temperature (ϑ*ᵣ*) in a building, **characterized in that** switching over between heating, neutral behavior and cooling is a function of an uncertainty, determined in a construction phase, in the knowledge of the internal and external heat gains, the uncertainty in the knowledge of the internal and external heat gains being determined by a lower extraneous heat limit (q̇_{g,ib}) and an upper extraneous heat limit (q̇_{g,ub}).

2. Method as claimed in Claim 1, **characterized in that** the uncertainty (q̇_{g,ub} *-* q̇_{g,lb}) in the knowledge of the internal and external heat gains is determined on the basis of room location, room characteristics and room use.

3. Method as claimed in Claim 1, **characterized in that** the uncertainty (q̇_{g,ub} - q̇_{g,lb}) in the knowledge of the internal and external heat gains is assigned to one of a total of three different uncertainty levels.

4. Method as claimed in Claim 3, **characterized in that** switching over between heating, neutral behavior and cooling is a function of:
- the outside temperature (ϑₒₐ) at a first uncertainty level valid for low uncertainty (q̇_{g,ub} - q̇_{g,lb});
- the outside temperature (ϑₒₐ) and the inlet temperature (ϑ_{f}) at a second uncertainty level valid for medium uncertainty (q̇_{g,ub} - q̇_{g,lb});
- the room temperature (ϑᵣ) or the return temperature (ϑᵣₜ) or the temperature (ϑ_{c}) of the building body at a third uncertainty level valid for high uncertainty (q̇_{g,ub} - q̇_{g,lb}).

5. Method as claimed in a preceding claim, **characterized in that** switching over between heating, neutral behavior and cooling is also a function of variations (q̇_{g,ub} - q̇_{g,lb}), determined in a construction phase, in heat gains in building rooms, the variations (q̇_{g,ub} - q̇_{g,lb}) in the heat gains being determined by the lower extraneous heat limits (q̇_{g,lb}) and the upper extraneous heat limits (q̇_{g,ub}).

6. Method as claimed in Claim 5, **characterized in that** the variations (q̇_{g,ub} - q̇_{g,lb}) in the heat gains in building rooms are determined on the basis of room location, room characteristics and room use.

7. Method as claimed in Claim 5, **characterized in that** the variations (q̇_{g,ub} - q̇_{g,lb}) in the heat gains are assigned to one of a total of three different levels.

8. Method as claimed in Claim 5, **characterized in that** switching over between heating, neutral behavior and cooling is a function of:
- the outside temperature (ϑₒₐ) at a first level valid for a small variation (q̇_{g,ub} - q̇_{g,lb});
- the outside temperature (ϑₒₐ) and the inlet temperature (ϑ_{f}) at a second level valid for a medium variation (q̇_{g,ub} -q̇_{g,lb});
- the room temperature (ϑᵣ) or the return temperature (ϑᵣₜ) or the temperature (ϑ_{c}) of the building body at a third level valid for a large variation (q̇_{g,ub} - q̇_{g,lb}).

9. Method as claimed in Claim 1, **characterized by** calculating at least one manipulated variable of an actuator (50; 51) as a function of the lower extraneous heat limit (q_{g,lb}) and the upper extraneous heat limit (q_{g,ub}).

10. Method as claimed in Claim 9, **characterized in that** the calculation of the manipulated variable is also a function of a comfort band (Δϑ_{r,Sp}).

11. Method as claimed in Claim 9, **characterized in that** the calculation of the manipulated variable is also a function of a measured variable and at least one further variable.

12. Method as claimed in Claim 11, **characterized in that** the measured variable is the inlet temperature (ϑ_{f}) or the return temperature (ϑᵣₜ) or a component temperature (ϑ_{c}).

13. Method as claimed in Claim 11, **characterized in that** the further variable is the outside temperature (ϑₐ) or the room temperature (ϑᵣ).

14. Method as claimed in a preceding claim, **characterized in that** the building has thermoactive component systems TABS (44; 45).

15. Method as claimed in a preceding claim, **characterized in that** overshooting of an upper limit value (ϑ_{r,sC}) of a comfort band is counteracted by a feedback signal, and undershooting of a lower limit value (ϑ_{r,SpH}) of the comfort band is counteracted by a feedback signal.

16. Method as claimed in Claim 15, **characterized in that** the feedback signal is generated as a function of the value of the room temperature (ϑᵣ) respectively detected at the end of an occupancy period.

17. Method as claimed in Claim 16, **characterized in that** the feedback signal is generated as a function of the minimum value of the room temperature (ϑᵣ) detected in an occupancy period, and of the maximum value of the room temperature (ϑᵣ) detected in the occupancy period.

18. Method as claimed in a preceding claim, **characterized in that** the upper extraneous heat limit (q_{g,ub}) and the lower extraneous heat limit (q_{g,lb}) are considered as a function of time.

19. Device (49) for feedback regulation of room temperature (ϑᵣ) using the method in accordance with one of claims 1 to 18.

## Revendications

1. Procédé de commande ou de régulation d'une température ambiante (ϑ*ᵣ*) dans un bâtiment, **caractérisé en ce**
**qu'**une commutation entre chauffer, comportement neutre et refroidir dépend d'une incertitude déterminée pendant une phase de construction, en ayant connaissance des gains thermiques internes et externes, l'incertitude étant déterminée, en ayant connaissance des gains thermiques internes et externes, au moyen d'une barrière inférieure de chaleur étrangère (*q̇_{g.lb}*) et d'une barrière supérieure de chaleur étrangère (*q̇_{g.ub}*).

2. Procédé selon la revendication 1, **caractérisé en ce**
**que** l'incertitude (*q̇_{g.u} - q̇_{g.lb}*) en ayant connaissance des gains thermiques internes et externes, est déterminée en raison de la situation de la pièce, des caractéristiques de la pièce et de l'utilisation de la pièce.

3. Procédé selon la revendication 1, **caractérisé en ce**
**que** l'incertitude (*q̇_{g.ub} - q̇_{g.lb}*), en ayant connaissance des gains thermiques internes et externes, est affectée à un échelon d'incertitude parmi en tout trois échelons d'incertitude différents.

4. Procédé selon la revendication 3, **caractérisé en ce**
**qu'**une commutation entre chauffer, comportement neutre et refroidir dépend :
- dans un premier échelon d'incertitude valable en cas d'incertitude moindre (*q̇_{g.ub} - q̇_{g.lb}*), de la température extérieure (ϑ*ₒₐ*)
- dans un deuxième échelon d'incertitude valable en cas d'incertitude moyenne (*q̇_{g.ub} - q̇_{g.lb}*), de la température extérieure (ϑ*ₒₐ*) et de la température d'admission (ϑ*_{f}*)
- dans un troisième échelon d'incertitude valable en cas de grande incertitude (*q̇_{g.ub} - q̇_{g.lb}*), de la température ambiante (ϑ*ᵣ*) ou de la température de retour (ϑ*ᵣₜ*) ou de la température de la masse du bâtiment (ϑ*ᵣₜ*).

5. Procédé selon une quelconque revendication précédente, **caractérisé en ce**
**que** la commutation entre chauffer, comportement neutre et refroidir dépend en outre de variations (*q̇_{g.ub} - q̇_{g.lb}*) de gains thermiques dans des pièces de bâtiment, déterminées dans une phase de construction, les variations (*q̇_{g.ub} - q̇_{g.lb}*) des gains thermiques étant déterminées par la barrière inférieure de chaleur étrangère (*q̇_{g.lb}*) et par la barrière supérieure de chaleur étrangère (*q̇_{g.ub}*).

6. Procédé selon la revendication 5, **caractérisé en ce**
**que** les variations (*q̇_{g.ub} - q̇_{g.lb}*) des gains thermiques dans des pièces de bâtiment sont déterminées en raison de la situation de la pièce, de caractéristiques de la pièce et de l'utilisation de la pièce.

7. Procédé selon la revendication 5, **caractérisé en ce**
**que** les variations (*q̇_{g.ub} - q̇_{g.lb}*) des gains thermiques sont affectées à un échelon parmi en tout trois échelons différents.

8. Procédé selon la revendication 5, **caractérisé en ce**
**qu'**une commutation entre chauffer, comportement neutre et refroidir dépend :
- dans un premier échelon valable en cas d'une variation moindre (*q̇_{g.ub} - q̇_{g.lb}*), de la température extérieure (ϑ*ₒₐ*);
- dans un deuxième échelon valable en cas d'une variation moyenne (*q̇_{g.ub} - q̇_{g.lb}*) de la température extérieure (ϑ*ₒₐ*) et de la température d'admission (ϑ*_{f}*);
- dans un troisième échelon valable en cas de grande variation (*q̇_{g.ub} - q̇_{g.lb}*), de la température ambiante (ϑ*ᵣ*) ou de la température de retour (ϑ*ᵣₜ*) ou de la température (ϑ*_{C}*) de la masse du bâtiment.

9. Procédé selon la revendication 1, **caractérisé par**
le calcul d'au moins une grandeur de réglage d'un organe de réglage (50 ; 51) en fonction de la barrière inférieure de chaleur étrangère (*q̇_{g.lb}*) et de la barrière supérieure de chaleur étrangère (*q̇_{g.ub}*).

10. Procédé selon la revendication 9, **caractérisé en ce**
**que** le calcul de la grandeur de réglage est en outre calculé en fonction d'une bande de confort (Δϑ*_{r.Sp}*).

11. Procédé selon la revendication 9 ou 10, **caractérisé en ce**
**que** le calcul de la grandeur de réglage est en outre calculé en fonction d'une grandeur de mesure et d'au moins une grandeur supplémentaire.

12. Procédé selon la revendication 11, **caractérisé en ce**
**que** la grandeur de mesure est la température d'admission (ϑ*_{f}*) ou la température de retour (ϑ*ᵣₜ*) ou une température d'un composant (ϑ*_{C}*).

13. Procédé selon la revendication 11, **caractérisé en ce**
**que** la grandeur supplémentaire est la température extérieure (ϑ*ₒₐ*) ou la température ambiante (ϑ*ᵣ*).

14. Procédé selon une quelconque revendication précédente, **caractérisé en ce**
**que** le bâtiment présente des systèmes de composants thermoactifs TABS (44, 45).

15. Procédé selon une quelconque revendication précédente, qui empêche un dépassement vers le haut d'une valeur limite supérieure (ϑ*_{r.SpC}*) d'une bande de confort et un dépassement vers le bas d'une valeur limite inférieure (ϑ*_{r.SpH}*) de la bande de confort au moyen d'un signal de rétroaction.

16. Procédé selon la revendication 15, **caractérisé en ce**
**que** le signal de rétroaction est généré en fonction de la valeur de la température ambiante (ϑ*ᵣ*), enregistrée respectivement à la fin d'une période d'enregistrement.

17. Procédé selon la revendication 16, **caractérisé en ce**
**que** le signal de rétroaction est généré en fonction de la valeur minimale de la température ambiante (ϑ*ᵣ*), enregistrée pendant une période d'enregistrement, et de la valeur maximale de la température ambiante (ϑ*ᵣ*), enregistrée pendant la période d'enregistrement.

18. Procédé selon une quelconque revendication précédente, **caractérisé en ce**
**que** la barrière supérieure de chaleur étrangère (*q̇_{g.lb}*) et la barrière inférieure de chaleur étrangère (*q̇_{g.ub}*) sont prises en compte en fonction du temps.

19. Dispositif (49) pour la régulation asservie de la température ambiante (ϑ*ᵣ*) selon le procédé conformément à l'une des revendications 1 à 18.
